# EUROPEAN PATENT SPECIFICATION

(11) **EP 0 940 617 B1**
(45) Date of publication and mention of the grant of the patent: **11.08.2004**
(21) Application number: 99200517.3
(22) Date of filing: 24.02.1999
(51) Int. Cl.: F16L 19/08

(54) **Quick-action coupling system**
Schnellkupplungssystem
Système d'accouplement rapide

(30) Priority: 05.03.1998 NL 1008491
(43) Date of publication of application: 08.09.1999
(73) Proprietor: Insigne-Berg Groep B.V., 2969 AC Oud-Alblas (NL)
(72) Inventor: Schilt, Piet, 2865 XS Ammerstol (NL)
(74) Representative: Keijser, Johannes Maurits L.F.

(56) References cited:
- DE-A- 3 941 236
- DE-A- 19 625 687
- FR-A- 2 237 110
- GB-A- 1 547 489
- GB-A- 2 210 123

## Description

The invention relates to a quick-action coupling system for connecting a counterproduct such as coupling piece to a pipe end.

GB-A-1 547 489 represents the state of the art and reflects the preamble of claim 1. This known system is especially designed for metal pipes. The clamping ring presents teeth each extending in peripheral direction, a series of these teeth running in axial direction.

The inner surface of the lips formed between the axial incisions of the clamping ring is provided with a plurality of grooves of arc-shaped profile forming what are called pipe-gripping ridges or teeth, which are symmetric in longitudinal section and have an apex angle of 90° or more.

These ridges or teeth are urged against the surface of the pipe when the pressure element - an in internally screw-threaded nut - is screwed onto the connector body and its internal face presses against the external face of the clamping ring.

As advantages of the structure, the publication mentions the fact that, since the teeth are composed of grooves having an arc-shaped profile, they are very strong and difficult to break; the coupling has an improved resistance against shocks or vibrations, and a uniform clamping force on the outer circumferential surface of the pipe.

With the understanding of the present invention, it is also observed that, because the pressure element, in form of the nut, acts directly upon the pressure ring, there is a risk that the pressure ring is rotated around the pipe along with the rotation of the nut while the system is mounted onto the pipe.

This prior art coupling system is not fit for - and also otherwise there doesn't exist - a good quick-action coupling system for flexible hoses comprising a spiral-shaped reinforcement or rigid PVC, sheathed with soft PVC. These couplings would have to be glued to the hose, but glue dissolves the plasticizer used, and such connections become detached under pressure.

All existing quick-action coupling systems generally produce a seal only on pipes or hoses with a smooth external surface, and they do not do so if there is a spiral-shaped groove on that external surface as a result of the spiral-shaped internal reinforcement, while the deliberately created flexibility of such a hose in that case also has a loosening effect on the grip of the coupling.

The object of the invention is to provide a solution to this problem and to propose a quick-action coupling system which is suitable for hoses of the type in which a spiral-shaped reinforcement is sheathed with soft plastic.

To this end, the system according to the invention is characterized in that the pressure element is in the form of a clamping bush which has the above-mentioned conical internal face, and has a union nut which engages behind a flanged edge and can be screwed onto screw thread on the counterproduct.

In this way it is prevented that - as may occur with the structure of GB-A-1 547 489 - the pressure ring is rotated around the pipe. It is then ensured that the clamping bush does not rotate, but only shifts axially, so that in this way, as a result of the one conical face present, it exerts a radially inwardly directed force component on the ribs or teeth.

Furthermore, it is made possible and ensured that the teeth of the clamping ring can engage so deeply in the soft outer material of the hose in that in doing so they are not hampered by the spiral-shaped groove on the external surface.

The 90° gripping ridges or teeth according to the state of the art are not well fit for this. There do exist in the market coupling systems having internal teeth which are a series of sharp teeth running in the peripheral direction and arranged on the ends of lips formed by incisions, each teeth having a substantially radially inwardly directed front face which is situated on the side facing the end of the pipe to be connected or facing the counterproduct respectively, while the rear face of said teeth forms an angle with the radial direction. An example of this type of sharp teeth can be found in the EP-A-19625687, it be that in this publication there are several series of these teeth arranged on the lips and not just one series and the ends thereof like the invention proposes.

Thus, starting from the fact that sharp teeth are known in themselves, the present invention now further proposes that the rear face of the teeth is a "cutting face", consisting of two parts with differing angles of gradient relative to the axial direction.

It has been found that such a profile of the teeth will function extraordinarily well on the flexible hoses comprising the spiral-shaped reinforcement and sheathed with soft PVC.

The invention will be explained below with reference to the appended drawing of an exemplary embodiment.
Fig. 1 shows an axial section through the coupling, in the state in which it has been fitted on the end of a hose, in order to connect the latter to a counterproduct in the form of a short pipe stub;
Fig. 2 shows a view towards the clamping ring in the direction of the arrow II in Fig. 3;
Fig. 3 shows an axial section of the clamping ring, while
Fig. 3a shows the detail A in Fig. 3 on a larger scale.

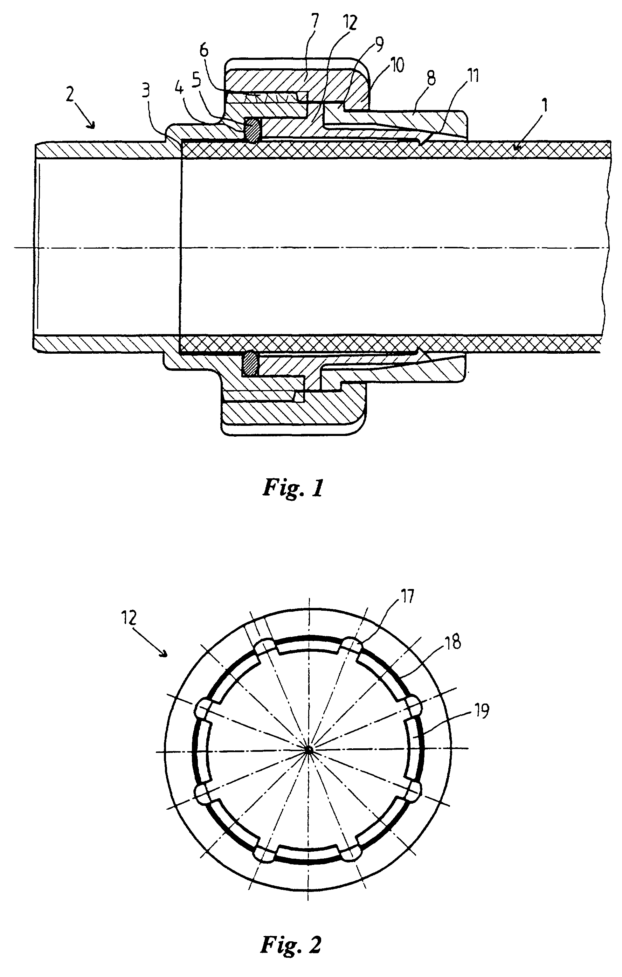

Fig. 1 shows the pipe end 1, connected to a counterproduct 2, which in this case is in the form of a short pipe stub, but which may be any coupling piece, elbow, T-piece, bend, diameter adapter etc.

The counterproduct 2 is formed in such a way that an internal chamber is formed by a first shoulder 3, by means of which an internal diameter is produced for the accommodation of the end of the hose, and a second shoulder 4, which forms a bearing face for an O-ring 5, the chamber acquiring a larger internal diameter in which a component of a clamping ring, yet to be discussed, can be accommodated.

External screw thread 6 is provided, with which thread a union nut 7 interacts, fulfilling an axially tightening function relative to a clamping bush 8, which for this purpose is, of course, provided in a manner known per se with an external flange 9, which is gripped by an internal flange 10 of the union nut or screw nut 7.

Clamping bush 8 is provided internally over part of its length with a conical face 11, which tapers in the direction facing away from the end of the hose to be inserted.

Clamping bush 8 holds clamping ring 12 in position, the details of which ring will be described with reference to the figures which follow.

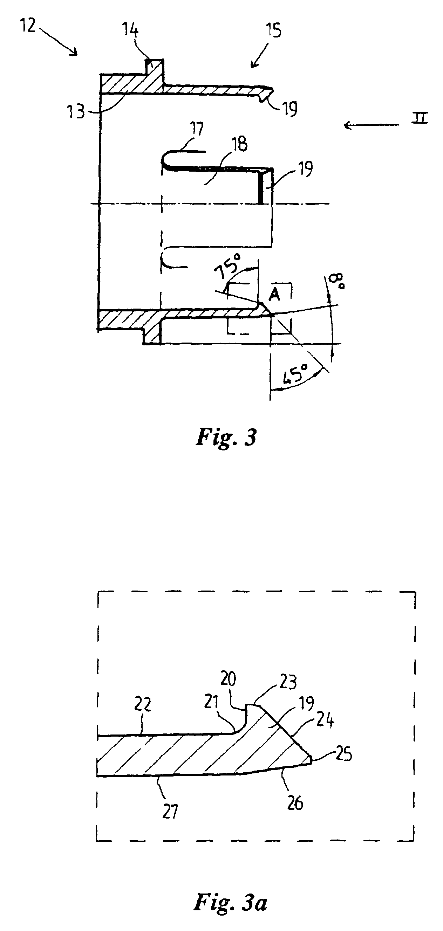

As can be seen from Fig. 3, the clamping ring 12 is substantially cylindrical. The body part 13 on the left in the figure, being the part which faces the end of the hose 1 to be coupled, extends to the end of the flange ring 14.

Abutting it is a casing part 15 of lower thickness, i.e. radial dimensions, than the body part 13, and being internally cylindrical, with the same diameter as that of the body part 13 at the position of the transition to said casing part 15.

Said casing part 15 is provided with axial incisions 17 along its full length, i.e. up to the point where the body part 13 begins, eight incisions being provided in the preferred embodiment shown. This produces eight lips, such as 18.

At their free ends, i.e. the ends facing away from the body part 13, all lips are provided with teeth 19 which are directed inwards, so that they face the central axis. The shape of the teeth can be seen from the enlarged detail of Fig. 3a. The front face 20 is directed radially inwards from a transition 21 towards the inner peripheral face of the casing 15 or the tooth 19. A short backward running flat part 23, which can be called a cutting face, connects with a sharp transition to said front face. It connects at an angle of preferably 75° (see Fig. 3) to the front face 20. This is followed by a face 24 which has a slightly larger angle of gradient relative to the axial direction, namely preferably 45°. The end edge 25 need not be sharp, because it fulfils no function. Beyond it, on the outside of casing part 15 or side 18, is a conical flat part 26, which preferably forms an angle of 8° with the axial direction, and which further connects to the undeformed external face 27 of casing part or tooth.

The material of the clamping ring 12 is preferably acetal copolymer (known as POM), which combines good mechanical strength properties with a slight degree of flexibility. The remaining parts can be made of rigid PVC.

It would be conceivable to make the clamping ring in two parts, namely a part corresponding to what is now called the body part 13 with the flange ring 14, and, on the other hand, a part which is in the form of the casing part described, in which the lips are formed. The casing part would then have to be slightly longer, while the lips would have the same axial length, because said lips must, of course, remain connected by an annular part. In the case of the single-part embodiment illustrated and described, the incisions 17 can run through to the material mass of the body part 13. The union nut and the clamping bush could also be combined to form one screw part.

For the fitting, the procedure is as follows:

First, the clamping bush 8 and the union nut 7 are pushed some distance onto the hose 1. Clamping ring 12 and O-ring 4 can then be pushed some distance onto the end of the hose 1 to be connected, and thereafter the combination is pushed into the chamber in the counterproduct 2. The same situation can be achieved by first inserting the O-ring 4 in the chamber and then pushing in the other two parts, or by pushing both the O-ring and the clamping ring into the chamber and then inserting the end of the hose, the latter, of course, knocking against the shoulder 4 on the end of the chamber.

During the tightening of the union nut 7 on the external screw thread 6 of the counterproduct 2, the end of clamping bush 8, owing to the fact that its flanged edge 9 is taken along by the inward directed flanged edge 10 of the union nut, will press the clamping ring 12 with its flanged edge 14 against the end face of the counterproduct 2, with the result that the correct space is automatically produced for the O-ring 4.

During the axial displacement of clamping bush 8 thus caused to the left in Fig. 1, its internal conical face 11 will come into contact with and glide over the short conical face 26 on the outside of the teeth 18. As a result of the angle of these faces relative to the axial direction, a small radially inward directed force component is produced, as is known, on the lips 18, which will ensure that the teeth 19 engage firmly in the material of hose 1.

At a point along the periphery, one or two adjoining teeth will then encounter a point where at the very small pitch angle of the spiral winding forming the reinforcement of a hose they cross a peripheral groove, so that they will not be able to gain a direct grip on the material. The specified tooth dimensioning is, however, still suitable for making the teeth grip so deeply in the hose material that the grip at that point also is sufficient to prevent the coupling from being pulled out of alignment, and possibly becoming detached.

Although the quick-action coupling system according to the invention is designed to solve the problem which occurs because of the spiral-shaped groove in the case of hoses formed with an internal spiral-shaped reinforcement, sheathed with soft plastic, the quick-action coupling designed to solve this problem is also suitable for use in the case of other pipes and hoses made of plastic.

## Claims

1. Quick-action coupling system for connecting a counterproduct (2) such as a coupling piece to a pipe end (1), in which the counterproduct is provided with an internal chamber, and in which a clamping ring (12) for placing around the pipe is present, which clamping ring is provided with internal teeth, which are designed to act upon the pipe surface, which clamping ring (12) is further provided with an external face (26), with which a pressure element which has an internal face and can be tightened by screw action in the axial direction relative to the counterproduct (2) interacts, of the above-mentioned external face and the above-mentioned internal face at least one being conical, in order to generate a radially inwardly directed force on the counterproduct forms a shoulder (4) against which a sealing ring (5) ultimately rests, the clamping ring (12) further comprising a casing part (15) which is provided with incisions (17) extending in the axial direction from the end facing away from the end of the pipe (1), and with a series of teeth (19) on the lips (18) formed by said incisions (17), **characterised in that** the pressure element is in the form of a clamping bush (8) which has the above-mentioned conical internal face (11), and has a union nut (7) which engages behind a flanged edge (9) and can be screwed onto screw thread (6) on the counterproduct (2).

2. Quick-action coupling system according to claim 1 in which the internal teeth are a series of sharp teeth (19) running in the peripheral direction and arranged on the ends of the lips (18) formed by the incisions (17), each teeth having a substantially radially inwardly directed front face (20) which is situated on the side facing the end of the pipe (1) to be connected or facing the counterproduct (2) respectively, while the rear face of said teeth forms an angle with the radial direction, **characterised in that** the rear face of the teeth is a "cutting face", consisting of two parts (23, 24) with differing angles of gradient relative to the axial direction.

## Patentansprüche

1. Schnellkupplungssystem zum Verbinden eines Gegenstücks (2), wie beispielsweise eines Kupplungsteils, mit einem Rohrende (1), wobei das Gegenstück mit einer inneren Kammer versehen ist und wobei ein Klemmring (12) zur Anbringung um das Rohr herum vorhanden ist, welcher Klemmring mit inneren Zähnen versehen ist, die dazu dienen, auf die Rohroberfläche einzuwirken, welcher Klemmring (12) des Weiteren mit einer Außenfläche (26) versehen ist, mit der ein Druckelement, das eine Innenfläche aufweist und durch Schraubwirkung in der axialen Richtung relativ zu dem Gegenstück (2) angezogen werden kann, in Wechselwirkung ist, wobei von der oben erwähnten Außenfläche und der oben erwähnten Innenfläche wenigstens eine konisch ist und, um eine radial nach innen gerichtete Kraft auf das Gegenstück zu erzeugen, einen Absatz (4) aufweist, an dem ein Dichtungsring (5) abschließend anliegt, wobei der Klemmring (12) des Weiteren ein Umhüllungsteil (15) umfasst, das mit Einschnitten (17), die sich in der axialen Richtung von dem Ende aus erstrecken, das vom Ende des Rohrs (1) weggewandt ist, und mit einer Reihe von Zähnen (19) an den Lippen (18) versehen ist, die durch die Einschnitte (17) gebildet werden, **dadurch gekennzeichnet, dass** das Druckelement die Form einer Klemmbuchse (8) hat, die die oben erwähnte konische Innenfläche (11) aufweist, und eine Überwurfmutter (7) aufweist, die hinter einer angeflanschten Kante (9) eingreift und auf Schraubengewinde (6) an dem Gegenstück (1) aufgeschraubt werden kann.

2. Schnellkupplungssystem nach Anspruch 1, wobei die inneren Zähne eine Reihe scharfer Zähne (19) sind, die in der Umfangsrichtung verlaufen und an den Enden der durch die Einschnitte (17) gebildeten Lippen (18) angeordnet sind, wobei jeder Zahn eine im Wesentlichen radial nach innen gerichtete Vorderseite (20) hat, die sich an der Seite befindet, die dem Ende des Rohrs (1) zugewandt ist, das verbunden werden soll, bzw. dem Gegenstück (2) zugewandt ist, wobei die Rückseite des Zahns einen Winkel zu der radialen Richtung bildet, **dadurch gekennzeichnet, dass** die Rückseite des Zahns eine "Schneidfläche" ist, die aus zwei Teilen (23, 24) mit unterschiedlichen Neigungswinkeln relativ zu der axialen Richtung besteht.

## Revendications

1. Système d'accouplement rapide pour connecter une contre pièce (2) telle qu'une pièce d'accouplement à une extrémité de tube (1), dans lequel la contre pièce présente une chambre interne, et dans lequel une bague de serrage (12) destinée à être disposée autour du tube est présente, laquelle bague de serrage présente des dents internes, lesquelles sont conçues pour agir sur la surface du tube, laquelle bague de serrage (12) en outre présentannt une face externe (26), avec laquelle un élément de pression qui a une face interne et peut être serré par action de vissage dans la direction axiale par rapport à la contre pièce (2) interagit, de la face externe mentionnée au dessus et de la face interne mentionnée au dessus au moins une étant conique, afin de générer une force dirigée radialement vers l'intérieur sur la contre pièce formant un épaulement (4) contre lequel repose finalement une bague d'étanchéité (5), la bague de serrage (12) en outre comprenant une partie enveloppante (15) qui présente des incisions (17) s'étendant dans la direction axiale à partir de l'extrémité faisant face en s'éloignant de l'extrémité du tube (1), et avec une série de dents (19) sur les lèvres (18) formées par lesdites incisions (17), **caractérisé en ce que** l'élément de pression est en forme de douille de serrage (8) qui a la face interne (11) conique mentionnée au dessus, et a un écrou de raccord (7) qui s'engage derrière un bord de bride (9) et peut être vissé sur un filetage de vis (6) sur la contre pièce (2).

2. Système d'accouplement rapide selon la revendication 1 dans lequel les dents internes sont une série de dents pointues (19) s'étendant dans la direction périphérique et agencées sur les extrémités des lèvres (18) formées par les incisions (17), chaque dent ayant une face avant (20) dirigée sensiblement radialement vers l'intérieur qui est placée sur le côté faisant face à l'extrémité du tube (1) à connecter ou faisant face à la contre pièce (2) respectivement, tandis que la face arrière desdites dents forme un angle avec la direction radiale, **caractérisé en ce que** la face arrière des dents est une "face coupante", consistant en deux parties (23, 24) avec différent angles gradient par rapport à la direction axiale.
